(19) Europäisches Patentamt
European Patent Office
Office européen des brevets

(11) **EP 3 805 799 A1**

(12) **EUROPEAN PATENT APPLICATION**

(43) Date of publication:
14.04.2021 Bulletin 2021/15

(51) Int Cl.:
*G01S 19/21* (2010.01)  *G01S 19/39* (2010.01)

(21) Application number: 19202533.6

(22) Date of filing: 10.10.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: HERE Global B.V.
5611 ZT Eindhoven (NL)

(72) Inventors:
• SÖDERHOLM, Stefan
  02780 Espoo (FI)
• SYRJÄRINNE, Jari Tapani
  33700 Tampere (FI)
• KUISMANEN, Saara
  33200 Tampere (FI)

(74) Representative: Cohausz & Florack
Patent- & Rechtsanwälte
Partnerschaftsgesellschaft mbB
Bleichstraße 14
40211 Düsseldorf (DE)

(54) **DETECTION OF GNSS DATA MANIPULATION BASED ON CORRECTIONAL GNSS DATA**

(57) It is inter-alia disclosed a method comprising determining a representative of GNSS positioning accuracy for a mobile device at least partially based on observation GNSS data and on correctional GNSS data; and determining, at least partially based on the representative of GNSS positioning accuracy, whether a GNSS related positioning is expected or unexpected for positioning of the mobile device.

Fig.1

**Description**

**FIELD OF THE DISCLOSURE**

The invention relates to the field of GNSS based radio positioning and more specifically to identifying potentially manipulated observed GNSS data which might comprise received GNSS signals.

**BACKGROUND**

Global navigation satellite systems (GNSS) such as the Global Positioning System (GPS) or the Galileo system form a basis for satellite based positioning. A mobile device receiving GNSS signals of e.g. four GNSS satellites may estimate its position based on GNSS navigation data included in GNSS signals received from each respective one of the four GNSS satellites. With Assisted-GNSS technology, GNSS signal receivers, e.g. in mobile devices, may obtain GNSS assistance data in addition to GNSS satellite signals, for example to take account of deteriorated GNSS signals e.g. in urban areas and/or to reduce the time required for acquiring GNSS satellite signals and navigation data, and for calculating a position solution (time-to-first-fix, TTFF). GNSS systems include e.g. the GPS system, the Galileo system, the GLONASS system and the Beidou system. In addition to these four global satellite constellations, regional augmentation systems exist which comprise QZSS, MSAS, WAAS, EGNOS, GAGAN and SDCM.

GNSS constellations offer Open Service (OS) signals for the civilian and "unauthorized use", and Regulated/Military signals for the authority and military use, latter of which typically require a specific receiver or encryption keys to use these signals for positioning (even for reception). On the contrary, the structure and format of the OS signals are publicly known as the Interface Control Documents describing the signals and data transmitted by the satellites are freely available. Also, the OS GNSS receivers are commercially available as modules, development kits etc. so it is relatively easy for an electrical engineer to get access to the GNSS signals and data, even to replicate the satellite signals with perfect receiver interoperability. This "easiness" and openness has led to the development of numerous malicious devices which can be used to "spoof' the GNSS receivers in various ways: either to make them report false position and/or time, or even totally jam/block the performance. Unfortunately, none of the existing GNSS systems have the means to authenticate the signals or data the satellites transmit, and hence efficiently avoid the spoofing. The lack of signal/service authentication is a very serious risk for the location-based services that use GNSS to validate the location of the device or the user e.g. for charging/transactions (road tolls, parking, taxi rides etc.). Especially, for the smartphone use cases spoofing has become as one of the major commercial risks.

In particular, low-cost GNSS receivers using open service signals are very vulnerable to false (spoofed) GNSS signals and data and can be affected by a malicious party. It is possible to create artificial signals and data with a nearby spoofer that cause the receiver to converge in a false location, velocity and/or time.

**SUMMARY OF SOME EMBODIMENTS OF THE INVENTION**

It is inter-alia an object of the present invention to improve detection of GNSS data manipulation.

According to an exemplary aspect of the invention, a method is disclosed, which comprises determining a representative of GNSS positioning accuracy for a mobile device at least partially based on observation GNSS data and on correctional GNSS data; and determining, at least partially based on the representative of GNSS positioning accuracy, whether a GNSS related positioning is expected or unexpected for positioning of the mobile device.

The method according to the exemplary aspect of the invention may, for example, at least partially be performed by an apparatus, wherein the apparatus may be a mobile device or a component of a mobile device, and in particular it may be the mobile device for which the representative of GNSS positioning accuracy is determined.

According to the exemplary aspect of the invention, furthermore, an apparatus is disclosed, which comprises means for at least partially realizing the method according to the exemplary aspect of the invention. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means such as a processor and a memory. Optionally, the apparatus may comprise various other components, like a radio interface, a data interface, a user interface etc.

For example, the apparatus comprises at least one processor and at least one memory including computer program code, the at least one memory and the computer program code configured to, with the at least one processor, cause an apparatus at least to perform at least partially the method and/or the steps of the method according to the exemplary aspect of the invention.

According to the exemplary aspect of the invention, furthermore, a system is disclosed, which comprises the apparatus.

For instance, the mobile device may be an Internet-of-Thing (IoT) device, a smart home device, a smartphone, a tablet computer, a notebook computer, a smart watch, and a smart band.

As an example, the GNSS related positioning is expected if the accuracy of the GNSS related positioning is expected and/or the GNSS related positioning is unexpected if the accuracy of the GNSS related positioning is unexpected, wherein, for instance, the accuracy of the GNSS related positioning is determined to be expected if the representative of GNSS positioning accuracy indicates an accuracy of good quality and/or the accuracy of the GNSS related positioning is determined to be un expected if the representative of GNSS positioning accuracy indicates an accuracy of low quality.

For example, the disclosed method may be part of a GNSS based positioning solution performed by the mobile device to obtain or determine an estimate of its position (e.g. a position estimate of the mobile device). The mobile device may be enabled for or support such GNSS based positioning based on the Galileo system or the GPS system. This may be understood to mean that the mobile device is configured to estimate its position at least partially based on one or more GNSS signals (e.g. GNSS signals received e.g. from at least four GNSS satellites) received at this position, the GNSS signals e.g. comprising GNSS navigation data (e.g. GNSS navigation data of the at least four GNSS satellites). For example, the mobile device may be configured to (e.g. periodically or repeatedly or continuously) scan for GNSS signals observable at the position of the mobile device. The mobile device may further be enabled to receive GNSS signals (at least one GNSS signal) from one or more (e.g. from at least four) GNSS satellites during a time period, e.g. for estimating its position.

Each GNSS satellite may (e.g. periodically or repeatedly or continuously) broadcast respective GNSS signals comprising GNSS navigation data. For example, each GNSS satellite may (e.g. periodically or repeatedly or continuously) broadcast a respective GNSS signal conveying a message corresponding to or containing GNSS navigation data of the respective satellite (e.g. the navigation data may be part of the message). An example of such a message is a Galileo F/NAV message as specified by the Galileo open service specifications that are presently available in the Internet under https://www.gsc-europa.eu/electronic-library/programme-reference-documents#open. Another example for such a message is a GPS navigation message as specified by the GPS specifications that are presently available in the Internet under https://www.gps.gov/technical/. It is to be noted that, while receiving at least one GNSS signal may accordingly be understood to mean that the at least one GNSS signal is received from a GNSS satellite, said at least one GNSS signal may further be received from a spoofing device, for example by receiving at least one GNSS signal conveying a message containing GNSS navigation data from the spoofing device instead of from the GNSS satellite. A potentially malicious GNSS signal received from such spoofing device may be structured to resemble a true GNSS signal received from a GNSS signal, however, may e.g. include a manipulated navigation message and/or manipulated navigation data.

GNSS navigation data comprised by or included in a GNSS signal may for example contain at least one of (1) ephemeris data that enable determining an orbital position of a GNSS satellite (e.g. the GNSS satellite from which the at least one GNSS signal is received) at a given time (e.g. for a limited period of time) and (2) clock data related to a first GNSS system time (e.g. to the GNSS system time of said GNSS satellite from which the at least one GNSS signal is received) at a given time (e.g. for a limited period of time). The clock data may enable determining a deviation of a clock of the GNSS satellite from a GNSS system time (e.g. Galileo system time or GPS time) at a given time. For example, the clock data may include or represent or contain clock correction parameters. The clock data may further enable determining a traveling time of the respective GNSS signal (e.g. from the GNSS satellite from which the at least one GNSS signal is received to the position of the mobile device).

For instance, the mobile device may comprise a GNSS component, e.g. a GPS or a Galileo component or a component configured to another GNSS system, wherein the GNSS component may be connected to at least one GNSS antenna, and wherein the at least one GNSS antenna is adapted to receive GNSS signals from a plurality of GNSS satellites. Accordingly, the observation GNSS data used in the method to determine the representative of GNSS positioning accuracy for the mobile device may be GNSS data observed by the GNSS component of the mobile device, e.g. comprising GNSS signals from one or more GNSS satellites received by the GNSS component and/or GNSS data obtained from GNSS signals from one or more GNSS satellites received by the GNSS component. As an example, said GNSS signals may comprise GNSS messages broadcasted by GNSS satellites. For instance, said GNSS signals may comprise navigation data (e.g. the above mentioned navigation data), wherein said navigation data may be part of the GNSS messages. The observation GNSS data may be assumed to represent observation GNSS data being associated with the mobile device. For instance, the observation GNSS data may be GNSS data configured to be used for positioning, e.g. configured to estimate the position of the mobile device. As an example, the observation GNSS data may configured to estimate a traveltime information for each signal of at least one signal between the GNSS component of the mobile device (that received the respective signal) and the satellite associated with the respective signal.

As an example embodiment, the GNSS related positioning is determined to be unexpected if the representative of GNSS positioning accuracy indicates an accuracy of low quality and/or wherein the GNSS related positioning is determined to be expected if the representative of GNSS positioning accuracy indicates an accuracy of good quality.

For instance, the GNSS related positioning is expected if the accuracy of the GNSS related positioning is expected and/or the GNSS related positioning is unexpected if the accuracy of the GNSS related positioning is unexpected, wherein, for instance, the accuracy of the GNSS related positioning is determined to be expected if the representative of GNSS positioning accuracy indicates an accuracy of good quality and/or the accuracy of the GNSS related positioning is determined to be un expected if the representative of GNSS positioning accuracy indicates an accuracy of low quality.

As an example embodiment, said determining, at least partially based on the representative of positioning accuracy, whether a GNSS related positioning is expected or unexpected for positioning of the mobile device comprises checking whether a positioning accuracy indicated by the representative of GNSS positioning accuracy is below a predefined accuracy threshold, and if not, a GNSS related positioning is determined to be unexpected, and if yes, a GNSS related positioning is determined to be expected.

As an example embodiment, the representative of GNSS positioning accuracy is indicative of an estimated target accuracy of a position determined based on the observed GNSS data and the correctional GNSS data.

As an example embodiment, the GNSS positioning may be performed by a GNSS Precise Point Positioning (PPP) system, wherein the Precise Point Positioning (PPP) system is configured to remove (or reduce) and/or model GNSS system errors to provide a high level of position accuracy wherein the above mentioned GNSS component (e.g. as part of the mobile device) may comprise a PPP receiver.

As an example embodiment, the representative of GNSS positioning accuracy comprises a Figure Of Merit value. For instance, if the GNSS system is a GNSS Precise Point Positioning (PPP) system the GNSS component may be configured to estimate the accuracy of the GNSS positioning by monitoring the Figure of Merit (FOM) value which may be the sum of the observation residuals.

As an example embodiment, the observation GNSS data is normally obtained from GNSS signals received at the mobile device.

As an example embodiment, the correctional GNSS data are obtained from a network server, in particular received by the mobile device via a wireless connection.

As an example embodiment, the observation GNSS data comprises at least one of the following:

  (i) satellite orbit data;
  (ii) satellite clock data;
  (iii) ionospheric data;
  (iv) tropospheric data;
  (v) site displacement data;

and wherein the correctional GNSS data comprises at least one of the following:

  (i) satellite orbit correction data;
  (ii) satellite clock correction data;
  (iii) ionospheric correction data;
  (iv) tropospheric correction data;
  (v) site displacement correction data.

As an example embodiment, an indication is provided if it is determined that the GNSS positioning is unexpected for positioning of the mobile device.

As an example embodiment, the indication comprises an information regarding at least one of:

  (i) a satellite signal on a specific frequency;
  (ii) at least one satellite constellation for positioning.

As an example embodiment, if it is determined that the GNSS positioning is unexpected for positioning of the mobile device, at least a part of the observation GNSS data being associated with the determined representative of GNSS positioning accuracy for the mobile device is removed.

As an example embodiment, a representative of a risk level is determined based at least partially on a number of determining a GNSS related positioning to be unexpected for positioning of the mobile device and/or on a magnitude indicated by each of at least one representative of GNSS positioning accuracy for the mobile device.

As an example embodiment, said observation GNSS data comprises at least one received GNSS signal comprising GNSS navigation data, wherein the GNSS navigation data comprises at least one of ephemeris data of a GNSS satellite and clock data of said GNSS satellite.

In certain exemplary embodiments of the invention, the ephemeris data may enable determining an orbital position of the GNSS satellite at a given time. For example, the ephemeris data may represent or contain Keplerian parameters. In particular, the ephemeris data may represent or contain ephemeris parameters as specified by the Galileo open service specifications or GPS specifications.

As an example embodiment, a position estimate of the mobile device is determined at least partially based on said observation GNSS data, in particular based on said at least one received GNSS signal comprising GNSS navigation data.

Estimating the position of the mobile device at least partially based on the at least one GNSS signal may be understood to mean estimating the position of the mobile device at least partially based on navigation data comprised by the at least one GNSS signal. Estimating the position of the mobile device at least partially based on the at least one GNSS signal may thus be understood to mean that the estimation depends on the GNSS signals and the GNSS navigation data. It is however to be understood that the estimating may optionally depend on further data or information.

Moreover, estimating the position of the mobile device may be understood to mean that a position estimate of the position of the mobile device is determined at least partially based on the GNSS signals and the GNSS navigation data. Therein, the estimating or determining may be performed according to a predetermined GNSS positioning algorithm as disclosed above in more detail.

As disclosed above, estimating the position of the mobile device may employ observing at least four GNSS satellites to enable the mobile device to estimate its position based on the observed GNSS signals and (e.g. valid) GNSS navigation data of these at least four GNSS satellites.

As an example embodiment, GNSS navigation data comprised by said at least one GNSS signal are valid (e.g. only) for a limited time period.

For example, the GNSS navigation data may contain or represent a reference time for the GNSS navigation data or parts thereof. For example, the GNSS navigation data or parts thereof may be valid for a predetermined time period before and after such a reference time. Alternatively or additionally, the GNSS navigation data may contain or represent a validity time indicating until when the GNSS navigation data or parts thereof are valid. A reference time or a validity time may be represented by or contained in the GNSS navigation data in the GNSS system time (e.g. GPS time or Galileo system time). In particular, a reference time or a validity time may be represented by or contained in the GNSS navigation data in seconds in the respective GNSS week (e.g. GPS week or Galileo week).

As disclosed above, the GNSS navigation data may contain ephemeris data enabling determining an orbital position of the GNSS satellite at a given time and/or clock data enabling determining a deviation of a clock of the GNSS satellite from a GNSS system time (e.g. Galileo system time or GPS time) at a given time. The ephemeris data or clock data may be only valid for a limited period of time and may no longer be used after this limited period of time. Accordingly, the ephemeris data and/or clock data may be parts of the GNSS navigation data that are only valid for a limited time period.

As an example embodiment, each GNSS satellite of one or more GNSS satellites of a GNSS system periodically broadcasts respective GNSS navigation data. As disclosed above, the respective GNSS navigation data may be part of a message conveyed by a respective GNSS signal broadcasted by the respective GNSS satellite. An example of such a message is a Galileo F/NAV message as specified by the Galileo open service specifications or a GPS navigation message as specified by the GPS specifications.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

## BRIEF DESCRIPTION OF THE FIGURES

Fig. 1        is a schematic block diagram of an example embodiment of an apparatus according to the invention;

Fig. 2        is a flow chart illustrating an example embodiment of a method 200 according to the invention (which may represent an example operation in the apparatus of Figure 1);

Fig. 3        is a picture of an exemplary embodiment of a system according to the invention;

Fig. 4a       is a flow chart illustrating an exemplary embodiment of a method 400 according to the invention;

Fig. 4b     is a flow chart illustrating an exemplary embodiment of a method 400' according to the invention;

Fig. 5a     is a flow chart illustrating an exemplary embodiment of a method 500 according to the invention;

Fig. 5b     is a flow chart illustrating an exemplary embodiment of a method 500' according to the invention;

Fig. 6     is a flow chart illustrating an exemplary embodiment of a method 600 according to the invention;

Fig. 7     is a block diagram of an exemplary embodiment of a mobile device according to the invention;

Fig. 8     is a block diagram of an exemplary embodiment of a server according to the invention; and

Fig. 9     is a schematic illustration of examples of tangible and non-transitory storage media according to the invention.

## DETAILED DESCRIPTION OF THE FIGURES

The following description serves to deepen the understanding of the present invention and shall be understood to complement and be read together with the description of example embodiments of the invention as provided in the above SUMMARY section of this specification.

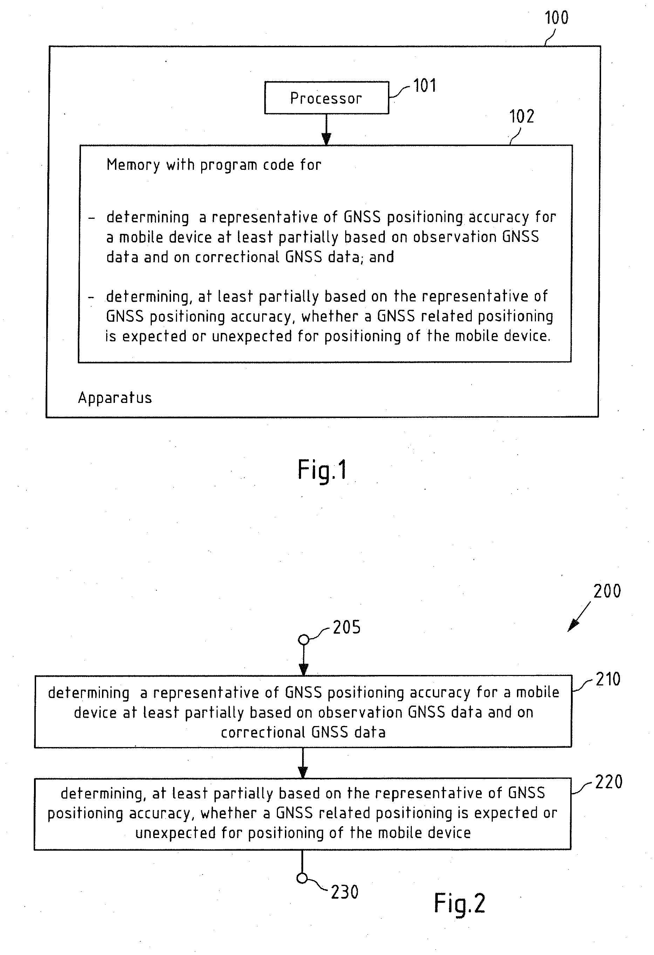

Figure 1 is a schematic block diagram of an example embodiment of an apparatus according to the invention. Apparatus 100 comprises a processor 101 and, linked to processor 101, a memory 102. Processor 101 is configured to execute computer program code stored in memory 102 in order to cause an apparatus to perform desired actions. Memory 102 is thus an example embodiment of a non-transitory computer readable storage medium, in which computer program code according to the invention is stored. For instance, memory 102 may store computer program code for determining a representative of GNSS positioning accuracy for a mobile device at least partially based on observation GNSS data and on correctional GNSS data, and for determining, at least partially based on the representative of GNSS positioning accuracy, whether a GNSS related positioning is expected or unexpected for positioning of the mobile device.

As an example, the GNSS related positioning is expected if the accuracy of the GNSS related positioning is expected and/or the GNSS related positioning is unexpected if the accuracy of the GNSS related positioning is unexpected, wherein, for instance, the accuracy of the GNSS related positioning is determined to be expected if the representative of GNSS positioning accuracy indicates an accuracy of good quality and/or the accuracy of the GNSS related positioning is determined to be un expected if the representative of GNSS positioning accuracy indicates an accuracy of low quality.

Apparatus 100 could be a server or any other kind of mobile or stationary apparatus (or device).

Apparatus 100 could equally be a component, like a chip, circuitry on a chip or a plug-in board, for any mobile or stationary device. Optionally, apparatus 100 could comprise various other components, like a data interface configured to enable an exchange of data with separate devices, a user interface like a touchscreen, a further memory, a further processor, etc. For instance, the mobile device may be one of an Internet-of-Thing (IoT) device, a smartphone, a tablet computer, a notebook computer, a smart watch, a smart glass and a smart band.

Apparatus 100 could equally be a component, like a chip, circuitry on a chip or a plug-in board, for any server, mobile or stationary device. Optionally, apparatus 100 could comprise various other components, like a data interface configured to enable an exchange of data with separate devices, a user interface like a touchscreen, a further memory, a further processor, etc.

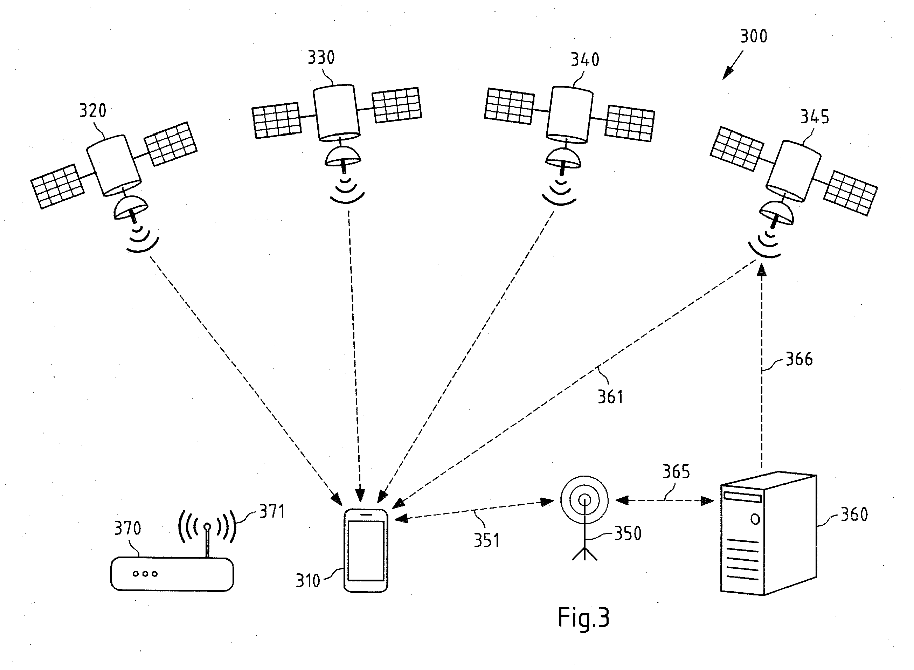

An operation of the apparatus 100 will now be described with reference to the flow chart 200 of Figure 2. The operation is an example embodiment of a method according to the invention. At least one processor 101 (may be one processor 101 or a plurality of processors 101) and the program code stored in at least one memory 102 (may be one memory 102 or a plurality of memories 102) cause at least one apparatus (may be one apparatus or a plurality of apparatuses) to perform the operation when the program code is retrieved from memory 102 and executed by processor 101. The at least one apparatus that is caused to perform the operation can be apparatus 100 or some other apparatus, for example but not necessarily a device comprising apparatus 100. The operation of the apparatus 100 will further be explained, as a non-limiting example, with reference to the schematic high-level block diagram of a system 300 according to an exemplary aspect of the invention depicted in Fig. 3. In the following, it is assumed that system 300 is a GNSS based positioning system and comprises a mobile device 310, which might correspond to apparatus 100, and a set of GNSS satellites 320, 330, 340, wherein each GNSS satellite 320, 330, 340, 345 broadcasts respective GNSS signals.

The apparatus 100 determines a representative of GNSS positioning accuracy for a mobile device at least partially based on observation GNSS data and on correctional GNSS data (action 210 of method 200).

For instance, the mobile device may be one of an Internet-of-Thing (IoT) device, smartphone, a tablet computer, a notebook computer, a smart watch, a smart glass and a smart band, wherein the mobile device is enabled for or support GNSS based positioning. Thus, for instance, the mobile device may comprise a GNSS component, e.g. a GPS or a Galileo component or a component configured to another GNSS system, wherein the GNSS component may be connected to at least one GNSS antenna, and wherein the at least one GNSS antenna is adapted to receive GNSS signals from a plurality of GNSS satellites. Accordingly, the observation GNSS data used in action 210 may be GNSS data observed by the GNSS component of the mobile device, e.g. comprising GNSS signals from one or more GNSS satellites received by the GNSS component and/or GNSS data obtained from GNSS signals from one or more GNSS satellites received by the GNSS component. As an example, said GNSS signals may comprise GNSS messages broadcasted by GNSS satellites. For instance, said GNSS signals may comprise navigation data, wherein said navigation data may be part of the GNSS messages. The observation GNSS data may be assumed to represent observation GNSS data being associated with the mobile device. For instance, the observation GNSS data may be GNSS data configured to be used for positioning, e.g. configured to estimate the position of the mobile device. As an example, the observation GNSS data may configured to estimate a traveltime information for each signal of at least one signal between the GNSS component of the mobile device (that received the respective signal) and the satellite associated with the respective signal.

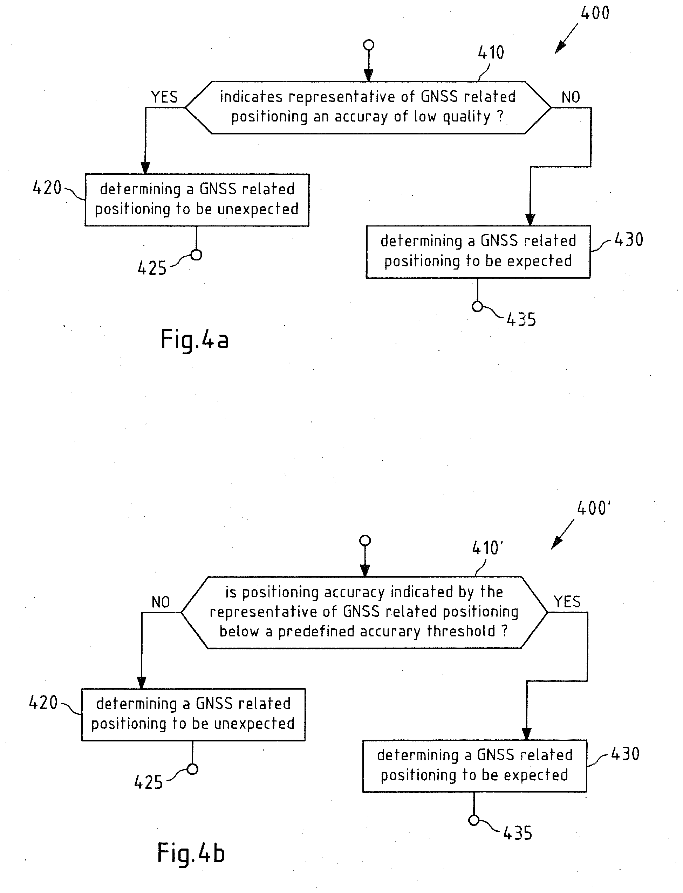

With respect to the example system 300, mobile device 310 (which might be apparatus 100 in an example embodiment) comprises the above mentioned GNSS component, wherein the GNSS component is connected to at least one GNSS antenna, and wherein the at least one GNSS antenna is adapted to receive GNSS signals from a plurality of GNSS satellites 320, 330, 340, 345 (e.g. at least four GNSS satellites 320, 330, 340, 345). Furthermore, as an example, mobile device 310 might be configured to perform method 200 of Fig. 2 and any example presented with respect to method 200, e.g. any of methods 400, 400', 500, 500' and 600 depicted in Figs. 4a, 4b, 5a, 5b and 6.

For instance, it is assumed that the observation GNSS data is normally obtained from at least one GNSS signal received at the mobile device which may correspond to the unspoofed case, wherein the received at least one GNSS signals may be received from at least one GNSS satellite 320, 330, 340, 345 as explained above. However, in case of a GNSS spoofing attack with respect to the mobile device (e.g. mobile device 310) and/or apparatus 100 GNSS signals received by the mobile device and/or the observation GNSS data may be at least partially (or completely) modified or replaced with falsified GNSS signals and/or observation GNSS data which may still provide GNSS interoperability such that these modified or replaced GNSS signals leads to falsified observation GNSS data and/or that modified or replaced observation GNSS data lead to falsified observation GNSS data, wherein then falsified observation GNSS data would lead to an unexpected GNSS position estimate and/or unexpected time of the position estimate. Then, in this "unnormal" case this falsified observation GNSS data would represent the observation GNSS data used in action 210 of method 200. Therefore, as an example, a GNSS related positioning may be considered to be unexpected for positioning of the mobile device if an estimated position of the mobile device (determined at least partially based on the observation GNSS data and, for instance, at least partially based on the correctional GNSS data) deviates from a correct position of the respective mobile device and/or that a time associated with the estimated position of the mobile device is incorrect (e.g., does not correspond to correct time of the position estimation). For instance, it may be possible to create artificial signals and data with a near-by-spoofer (e.g. positioned near-by to mobile device 310 depicted in Fig. 3, as exemplarily depicted by optional spoofing device 370 in Fig. 3 which transmits spoofing signals to mobile device 310) that cause the GNSS component of the mobile device to converge in a false GNSS position/location, velocity or time.

As a non-limiting example, the mobile device may be apparatus 100, but as another non-limiting example apparatus 100 may be different from the mobile device. In this other example, for instance, the observation GNSS data may be observed and/or obtained by the mobile device and may be transmitted to the apparatus 100 in order to provide the observation GNSS data to the apparatus 100 for performing method 200.

For instance, the correctional GNSS data used in action 210 may comprise data for correcting at least a part of the observation GNSS data and/or for correcting a position estimated based on the observation GNSS data, e.g. for correcting at least one error in at least a part of the observation GNSS data.

As an example, the apparatus 100 may be configured to obtain the correctional GNSS data from at least one server (e.g. at least one network server via a wireless connection), e.g. at least one server 360 depicted in Fig. 3. For instance, said obtaining the correctional GNSS data by apparatus 100 may comprise receiving the correctional GNSS data via a bidirectional communication link which might comprise a wireless communication link, e.g. a cellular communication link or a Wi-Fi communication link or another well-suited communication link, i.e., said wireless connection might comprise a bidirectional communication link. Furthermore, the bidirectional communication link may comprise the Internet E.g., said at least one server 360 may be a trusted/secure network server.

For instance, server 360 depicted in Fig. 3 may communicate with an Wi-Fi access point 350 (or a cellular base station - which could replace Wi-Fi access point 350 in Fig. 3) via a bidirectional communication link 365 (which might comprise the Internet) and the Wi-Fi access point 365 (or the cellular base station) may communicate with the mobile device 310 via a bidirectional wireless communication link 351 in order to transmit the correctional GNSS data from the server 360 to the mobile device 310, wherein the bidirectional wireless communication link 351 enables to transmit and receive data via said communication link 351. Examples of such a wireless communication link 351 include a wireless communication path or link in a wireless communication network, in particular a terrestrial wireless communication network like a Wireless Local Area Network (WLAN) or a cellular network. WLAN is for example specified by the standards of the IEEE 802.11 family (http://www.ieee.org/). A cellular network may for example be a mobile phone network like a 2G/3G/4G/5G cellular communication network. The 2G/3G/4G/5G cellular radio communication standards are developed by the 3GPP and presently available under http://www.3gpp.org/. A wireless connection may further include a Device-to-Device (D2D) communication path (e.g. involving vehicles, mobile devices, Road Side Units (RSU) or IOT devices). The correctional GNSS data may be received directly or indirectly from the network server 360 via any one or via any combination of such wireless connections including a necessary number of hops, e.g. by mobile device 310 and/or apparatus 100.

Thus, as an example embodiment, the correctional GNSS data may not be received by the GNSS component of the mobile device, and/or, e.g., the correctional GNSS data may not be transmitted by a satellite 320, 330, 340, 345 of the GNSS positioning system (e.g. not transmitted by each satellite 320, 330, 340, 345 of the GNSS positioning system), wherein, for instance, the correctional GNSS data is received via a bidirectional communication link (e.g. wireless bidirectional communication link) from at least one server.

Furthermore, as another example embodiment, the apparatus 100 may be configured to obtain the correctional GNSS data from the at least one server via a satellite, wherein the satellite broadcasts the correctional GNSS data. As an example, with respect to Fig. 3, the GNSS component of mobile device 310 may be configured to receive the correctional GNSS data from a satellite 345 (which might be a GNSS satellite of the GNSS positioning system but could be a separate satellite), wherein the at least one server 360 transmits the correctional GNSS data with an uplink connection 366 to the satellite 345 such that the satellite 345 broadcasts the correction GNSS data via a unidirectional communication link 361 to mobile device 310 (via the at least one GNSS antenna and the GNSS component of the mobile device 310).

For instance, the correctional GNSS data may be provided by at least one server provider.

Apparatus 100 determines a representative of GNSS positioning accuracy for a mobile device at least partially based on the observation GNSS data and based on the correctional GNSS data in action 210 of method 200. For instance, said representative of GNSS positioning accuracy for the mobile device may represent an estimation of GNSS positioning accuracy if at least a part (or all) of the correctional GNSS data is applied to at least part (or all) of the observation GNSS data. As an example, if Precise Point Positioning (PPP) is applied in the GNSS system for estimation of a GNSS position of the mobile device, wherein PPP enables that errors in GNSS observation data can be corrected by means of said GNSS correction data, such PPP system may provide a measure (or measures) for accuracy of GNSS positioning if errors in GNSS observation data are corrected by means of GNSS correction data, wherein said measure for accuracy of GNSS positioning may represent the representative of GNSS positioning accuracy for a mobile device determined at least partially based on the observation GNSS data and based on the correctional GNSS data in action 210.

Furthermore, as an example embodiment, the representative of GNSS positioning accuracy is indicative of an estimated target accuracy of a position determined (or estimated) based on the observed GNSS data and the correctional GNSS data.

E.g., said representative of GNSS positioning accuracy being indicative of an estimated target accuracy of a position determined (or estimated) based on the observed GNSS data and the correctional GNSS data may comprise a value representing an accuracy indicating a distance, e.g. a value being expressed in meter, centimeter, millimeter, or any other well suited distance unit. For instance, this value representing an accuracy indicating a distance may be a value representing an uncertainty of position estimation. For example, if this value indicates a distance of 1m then it may be assumed that the accuracy of position estimation is within this distance, i.e. within 1m with regard of this example.

As a non-limiting example embodiment, said representative of GNSS positioning accuracy may comprise (or may represent) a Figure Of Merit (FOM) value. For instance, the GNSS positioning system may be a Precise Point Positioning (PPP) system which is configured to remove and/or model GNSS system errors to provide a high level of position accuracy wherein the GNSS component of the mobile device 310 may comprise a PPP receiver, and wherein the PPP receiver may be configured to estimate the accuracy of the GNSS positioning by monitoring the Figure of Merit (FOM) value which may be the sum of the observation residuals. For instance, the better the accuracy of the estimation the lower the FOM value may be.

The apparatus 100 determines, at least partially based on the representative of GNSS positioning accuracy, whether a GNSS related positioning is expected or unexpected for positioning of the mobile device (action 220).

For instance, it may be assumed that in case of a GNSS spoofing attack on the mobile device at least one GNSS signal received by the mobile device and/or at least a part (or all) of the observation GNSS data (which might comprise and/or be obtained based on GNSS signals received by the mobile device) may be falsified in order to falsify a position estimated being performed based on the observation GNSS data. Then, furthermore, it could be assumed that this (e.g. at least partially) spoofed observation GNSS data does not take into account at least some (or all) of the errors which can be corrected by means of the correctional GNSS data and therefore, when the GNSS component of the mobile device (or another GNSS functionality of the mobile device and/or apparatus 100) is being spoofed and the real and valid correctional GNSS data are applied to the observation GNSS data, the accuracy of the position solution of the mobile device degrades compared to the case of unspoofed observation GNSS data, wherein the accuracy of the position solution of the mobile device might be indicated by the representative of GNSS positioning accuracy for the mobile device determined by apparatus 100 in action 210. For instance, said determining, at least partially based on the representative of GNSS positioning accuracy, whether a GNSS related positioning is expected or unexpected for positioning of the mobile device (action 220), may be considered to represent determining at least partially based on the representative of GNSS positioning accuracy, whether observation GNSS data is potentially manipulated or not, in particular whether the received at least one GNSS signal is potentially manipulated or not, wherein a potentially manipulated observation GNSS data (e.g. a potentially manipulated received at least one GNSS data) corresponds the case that the GNSS related positioning is unexpected for positioning of the mobile device in action 200, and wherein a potentially non-manipulated observation GNSS data (e.g. a potentially non-manipulated received at least one GNSS data) corresponds the case that the GNSS related positioning is expected for positioning of the mobile device in action 200.

As an example embodiment, the disclosed method 200 may be part of a GNSS based positioning solution performed by the apparatus 100 or by the mobile device 310 to obtain or determine an estimate of its position (e.g. a position estimate of the mobile device). The apparatus 100 or the mobile device 310 may be enabled for or support such GNSS based positioning based on the Galileo system or the GPS system. This may be understood to mean that the apparatus 100 or the mobile device 310 is configured to estimate its position at least partially based on one or more GNSS signals (e.g. GNSS signals received e.g. from at least four GNSS satellites, e.g. comprising GNSS satellites 320, 330, 340, 345 shown in Fig. 3) received at this position, the GNSS signals e.g. comprising GNSS navigation data (e.g. GNSS navigation data of the at least four GNSS satellites). For example, the apparatus 100 or the mobile device 310 may be configured to (e.g. periodically or repeatedly or continuously) scan for GNSS signals observable at the position of the mobile device, e.g. by means of the GNSS component. The apparatus 100 or the mobile device 310 may further be enabled to receive GNSS signals (at least one GNSS signal) from one or more (e.g. from at least four) GNSS satellites 320, 330, 340, 345 during a time period, e.g. for estimating its position.

Each GNSS satellite 320, 330, 340, 345 may (e.g. periodically or repeatedly or continuously) broadcast respective GNSS signals comprising GNSS navigation data. For example, each GNSS satellite 320, 330, 340, 345 may (e.g. periodically or repeatedly or continuously) broadcast a respective GNSS signal conveying a message corresponding to or containing GNSS navigation data of the respective satellite (e.g. the navigation data may be part of the message). An example of such a message is a Galileo F/NAV message as specified by the Galileo open service specifications that are presently available in the Internet under https://www.gsc-europa.eu/electronic-library/programme-reference-documents#open. Another example for such a message is a GPS navigation message as specified by the GPS specifications that are presently available in the Internet under https://www.gps.gov/technical/. It is to be noted that, while receiving at least one GNSS signal may accordingly be understood to mean that the at least one GNSS signal is received from a GNSS satellite 320, 330, 340, 345, said at least one GNSS signal may further be received from a spoofing device 370, for example by receiving at least one GNSS signal conveying a message containing GNSS navigation data from the spoofing device 370 instead of from the GNSS satellite. A potentially malicious GNSS signal received from such spoofing device 370 may be structured to resemble a true GNSS signal received from a GNSS signal, however, may e.g. include a manipulated navigation message and/or manipulated navigation data.

GNSS navigation data comprised by or included in a GNSS signal may for example contain at least one of (1) ephemeris data that enable determining an orbital position of a GNSS satellite (e.g. the GNSS satellite from which the at least one GNSS signal is received) at a given time (e.g. for a limited period of time) and (2) clock data related to a first GNSS system time (e.g. to the GNSS system time of said GNSS satellite from which the at least one GNSS signal is received) at a given time (e.g. for a limited period of time). The clock data may enable determining a deviation of a clock of the GNSS satellite from a GNSS system time (e.g. Galileo system time or GPS time) at a given time. For example, the clock data may include or represent or contain clock correction parameters which could be part of the correctional GNSS data. The clock data may further enable determining a traveling time of the respective GNSS signal (e.g. from the GNSS satellite from which the at least one GNSS signal is received to the position of the mobile device).

In an exemplary embodiment, the method 200 comprises determining a position estimate of the mobile device at least partially based on the observation GNSS data, which may be obtained from the received at least one GNSS signal received by the mobile device, e.g. received by above mentioned GNSS component of the mobile device.

This may be understood to mean determining a position estimate of the mobile device at least partially based on ephemeris data and clock data included in or comprised by GNSS navigation data comprised by the at least one GNSS signal received by the mobile device (e.g. mobile device 310 or, if apparatus 100 is a mobile device, by apparatus 100). It is however to be understood that the determining may optionally depend on further data or information. For example, based on received GNSS navigation data from at least four GNSS satellites, the mobile device may be configured to derive respective positions of each of the at least four GNSS satellites and a traveling time of respective GNSS signals from each of the at least four GNSS satellites. Based on the traveling time, e.g. by multiplying the traveling time by the speed of light, the mobile device may be configured to determine the so called pseudorange, i.e. the distance between the mobile device and a respective transmitting GNSS satellite. For example, based on such information, the mobile device may be configured to determine an estimate of its position. As a non-limiting example, a corresponding positioning algorithm used by the mobile device when determining its position may include:

- for each one of a set of at least four GNSS satellites, determining a pseudorange between the mobile device and the respective one of the at least four GNSS satellites at least partially based on navigation data (e.g. clock data) included in a GNSS signal broadcasted by the respective one of the at least four GNSS satellites;
- for each one of the set of the at least four GNSS satellites, determining an orbital position of the respective one of the at least four GNSS satellites at the time of transmitting at least partially based on the navigation data (e.g. ephemeris data) included in the GNSS signal broadcasted by the respective one of the at least four GNSS satellites; and
- determining a position of the mobile device, at least in part, based on the determined pseudoranges between the mobile device and each one of the at least four satellites and the determined orbital positions of the at least four satellites for example by employing pseudoranging.

Fig. 4a is a flow chart 400 illustrating an exemplary embodiment of a method 400 according to the invention, wherein this flow chart 400 may be part or may correspond to action 220 of method 200. Without limiting the scope of the invention, it is assumed in the following that the apparatus 100 as described above with respect to Fig. 1 performs the steps of flow chart 500', wherein apparatus 100 may be a mobile device (e.g. mobile device 310).

As an example, if the representative of GNSS positioning accuracy indicates an accuracy of low quality it may be determined that a GNSS related positioning is unexpected for positioning of the mobile device (e.g. since it might be assumed that the correctional GNSS data does not match (at least partially) with the observation GNSS data for correcting errors of the observation GNSS data) and/or if the representative of GNSS positioning accuracy indicates an accuracy of good accuracy it may be determined that a GNSS related positioning is expected for positioning of the mobile device (e.g. since it might be assumed that the correctional GNSS data matches with the observation GNSS data such that correctional GNSS data correctly corrects errors in the observation GNSS data). Thus, the representative of GNSS positioning determined in action 220 might be considered to represent an indication whether GNSS positioning of the mobile device can be considered to be unexpected (i.e., spoofed) or to be expected (i.e., not spoofed).

Therefore, for instance, it may be checked in action 410 of method 400 whether the representative of GNSS positioning accuracy indicates an accuracy of low quality, and if this checking yields a positive result, method 400 may proceed with determining a GNSS related positioning to be unexpected since then it may be assumed that a position of the mobile device estimated based (at least in part) on the observation GNSS data and the correctional GNSS data (used in action 210) may be considered to be unexpected since it may be assumed that the estimated position of the mobile device deviates from a correct position of the respective mobile device and/or that a time associated with the estimated position of the mobile device is incorrect (e.g., does not correspond to the correct time of the position estimation).

Furthermore, if said checking in action 410 yields a negative results, which might be considered to be case that the representative of GNSS positioning accuracy indicates an accuracy of good accuracy, method 400 may proceed with determining a GNSS related positioning to be expected since it may be assumed that the estimated position of the mobile device does not deviate from a correct position of the respective mobile device (or deviates only within a small distance, e.g. according to the accuracy indicated by the representative of GNSS positioning accuracy).

Fig. 4b is a flow chart 400' illustrating an exemplary embodiment of a method 400' according to the invention, wherein this flow chart 400' may be part or may correspond to action 220 of method 200, and wherein, for instance, this method 400' may be considered to be a specific embodiment of method 400 depicted in Fig. 4a. Without limiting the scope of the invention, it is assumed in the following that the apparatus 100 as described above with respect to Fig. 1 performs the steps of flow chart 500', wherein apparatus 100 may be a mobile device (e.g. mobile device 310).

In action 410' it is checked whether a positioning accuracy indicated by the representative of GNSS positioning accuracy is below a predefined accuracy threshold. For instance, the representative of GNSS positioning accuracy may indicate a value representing an uncertainty of position estimation, wherein this value may be represented by a distance value, e.g. a value being expressed in meters, centimeter, millimeter, or any other well suited distance unit. Thus, for instance if the value representing an uncertainty of position estimation (e.g. the distance value) is low this represents a good accuracy since the uncertainty of position estimation is considered to be low and if the value is high this represents a poos accuracy since the uncertainty of position estimation is considered to be good. As an non limiting example, the predefined accuracy threshold may be 0,005m, or 0,01m, 0,02m, 0,05m, 0,1m, 0,3m, 0,5m, 1m or 2m or any other well-suited value of the predefined accuracy threshold. For instance, if the GNSS positioning system is a PPP system the predefined accuracy threshold may be 0,005m, or 0,01m, 0,02m, 0,05m, 0,1m, in particular 0,005m or 0,01m.

If the checking in action 410' yields a positive result, i.e., if the positioning accuracy indicated by the representative of GNSS positioning accuracy is below the predefined accuracy threshold, method 400' may proceed with determining a GNSS related positioning to be expected in action 430 since in this case it may be assumed that representative of GNSS positioning accuracy indicates an accuracy of good quality (i.e., that representative of GNSS positioning accuracy does not indicate an accuracy of low quality) and thus, for instance, this case may be considered to correspond to the negative result of the check performed in action 410 of method 400. Thus, for instance, if the checking in action 410' yields a positive result, it is determined that the representative of GNSS positioning accuracy indicates an accuracy of good quality and the accuracy of the GNSS related positioning is determined to be expected.

If the checking in action 410' yields a negative result, i.e., if the positioning accuracy indicated by the representative of GNSS positioning accuracy is not below the predefined accuracy threshold (e.g. if the accuracy indicated by the representative of GNSS positioning accuracy is equal or higher than the predefined accuracy threshold) method 400' may proceed with determining a GNSS related positioning to be unexpected in action 420 since in this case it may be assumed that representative of GNSS positioning accuracy indicates an accuracy of poor quality (i.e., that representative of GNSS positioning accuracy does indicate an accuracy of low quality) and thus, for instance, this case may be considered to correspond to the positive result of the check performed in action 410 of method 400. Thus, for instance, if the checking in action 410' yields a negative result, it is determined that the representative of GNSS positioning accuracy indicates an low (or poor) quality and the accuracy of the GNSS related positioning is determined to be unexpected.

As an example embodiment, the correctional GNSS data comprises at least one of the following:

(i) satellite orbit correction data;
(ii) satellite clock correction data;
(iii) ionospheric correction data;
(iv) tropospheric correction data;
(v) site displacement correction data.

For instance, if the correctional GNSS data comprises satellite orbit correction data it is possible to correct for satellite orbit errors which might lead to errors in GNSS signals. E.g., without satellite orbit correction data the error in GNSS signals introduced by satellite orbit errors may be in an error range of $\pm 2,5m$. Thus, satellite orbit errors in the observation GNSS data may be corrected by virtually eliminating the orbit errors by using satellite orbit correction data, which may be denoted as precise satellite orbit correction data. As an example, the observation GNSS data may comprise satellite orbit data which is broadcasted in a GNSS signal broadcasted by a respective GNSS satellite 320, 330, 340, 345 and can be received by the GNSS component of the mobile device from the respective GNSS satellite, wherein the satellite orbit data is associated with the respective GNSS satellite, wherein this satellite orbit data may be part of the navigation data of the GNSS signal transmitted by the respective GNSS satellite. Thus, the satellite orbit correction data may be used for correcting satellite orbit data of the observation GNSS data.

For instance, if the correctional GNSS data comprises satellite clock correction data it is possible to correct for satellite clock errors which might lead to errors in GNSS signals. E.g., without satellite clock correction data the error in GNSS signals introduced by satellite clock errors may be in an error range of $\pm 2m$. Thus, satellite clock errors in the observation GNSS data may be corrected by virtually eliminating the satellite clock errors by using satellite clock correction data, which may be denoted as precise satellite clock correction data. As an example, the observation GNSS data may comprise satellite clock data which is broadcasted in a GNSS signal broadcasted by a respective GNSS satellite 320, 330, 340, 345 and can be received by the GNSS component of the mobile device from the respective GNSS satellite 320, 330, 340, 345, wherein the satellite clock data is associated with the respective GNSS satellite, wherein this satellite clock data may be part of the navigation data of the GNSS signal transmitted by the respective GNSS satellite. Thus, the satellite clock correction data may be used for correcting satellite clock data of the observation GNSS data.

For instance, if the correctional GNSS data comprises ionospheric correction data it is possible to correct for ionospheric errors which might lead to errors in GNSS signals. As an example, said ionospheric errors may result from a delay on a GNSS signal transmitted from a GNSS satellite to the GNSS component of the mobile device through the ionosphere, i.e., the additional delay to the GNSS signal introduced by the ionosphere. For instance, the ionospheric correction data can be used to obtain a more precise ionospheric model which can be applied to GNSS positioning. E.g., without ionospheric correction data the error in GNSS signals introduced by ionospheric errors (ionospheric delays) may be in an error range of $\pm 5m$. Thus, ionospheric errors in the observation GNSS data may be corrected by virtually eliminating the ionospheric errors by using ionospheric errors correction data. As an example, the observation GNSS data may comprise ionospheric data which is broadcasted in a GNSS signal broadcasted by a respective GNSS satellite and can be received by the GNSS component of the mobile device from the respective GNSS satellite, wherein this ionospheric correction data may be part of the navigation data of the GNSS signal transmitted by the respective GNSS satellite. As an example, the observation GNSS data may comprise ionospheric data which is broadcasted in a GNSS signal broadcasted by a respective GNSS satellite 320, 330, 340, 345 and can be received by the GNSS component of the mobile device from the respective GNSS satellite 320, 330, 340, 345, wherein this ionospheric data may be part of the navigation data of the GNSS signal transmitted by the respective GNSS satellite. Thus, the ionospheric correction data may be used for correcting ionospheric data of the observation GNSS data.

For instance, if the correctional GNSS data comprises tropospheric correction data it is possible to correct for tropospheric errors which might lead to errors in GNSS signals. As an example, said tropospheric errors may result from a delay on a GNSS signal transmitted from a GNSS satellite to the GNSS component of the mobile device through the troposphere, i.e., the additional delay to the GNSS signal introduced by the troposphere. For instance, the tropospheric correction data can be used to obtain a more precise tropospheric model which can be applied to GNSS positioning. E.g., without tropospheric correction data the error in GNSS signals introduced by ionospheric errors (tropospheric delays) may be in an error range of $\pm 0,5$m. Thus, tropospheric errors in the observation GNSS data may be corrected by virtually eliminating the tropospheric errors by using tropospheric correction data. Thus, the tropospheric correction data may be used for correcting tropospheric data of the observation GNSS data.

For instance, if the correctional GNSS data comprises site displacement correction data it is possible to correct for site displacement effects which might lead to errors in GNSS signals. As an example, said site displacement effects may result from solid earth tide and ocean loading, wherein the site displacement correction data may be obtained based on monitoring the sun and the moon either within the GNSS component or by the external provider. Thus, the site displacement correction data may be used for correcting site displacement data of the observation GNSS data.

Thus, for instance, at least one of the above mentioned GNSS correction data (i), (ii), (iii), (iv) and (v) may be used to determine a better (e.g. more accurate) travel time of a GNSS signal received by the GNSS component of the mobile device (e.g. mobile device 310) in conjunction with the observed GNSS data in order to estimate the position of the mobile device, wherein this estimation of the mobile device may be performed by the mobile device itself or by apparatus 100, wherein, as a non-limiting example, apparatus 100 may represent the mobile device.

And/or, for instance, in action 210 of method 200 at least one of the above mentioned GNSS correction data (i), (ii), (iii), (iv) and (v) may be used to determine the representative of GNSS positioning accuracy.

Furthermore, as an example, if the observation GNSS data is at least partially spoofed it may be assumed that the at least partially spoofed observation GNSS data does not take into account some or all the errors that can be corrected by the GNSS correction data such that when the GNSS signal and/or the GNSS component of the mobile device (e.g. mobile device 310) and/or the GNSS functionality of apparatus 100 is spoofed and the real and valid GNSS correction data is applied to the at least partially spoofed observation GNSS data (which is then used in action 210 as observation GNSS data) the accuracy of the position solution degrades which is indicated by a respective representative of GNSS positioning accuracy determined by action 210 of method 200.

For instance, if the representative of GNSS positioning accuracy indicates a distance value, wherein a smaller distance value may indicate a higher accuracy compared to a higher distance value, it may be assumed that in case of (e.g. at least partially) spoofed observation GNSS data the accuracy indicated by the distance value of the representative of GNSS positioning is at least a magnitude higher than the distance value of the representative of GNSS positioning for unspoofed observation GNSS data. This may be due to the fact that the error correction(s) no longer match the error(s) in the observation GNSS data since it can be assumed that the spoofer (e.g. spoofer 370) can not accurately generate errors in the signals which correspond to the real GNSS signals (transmitted by one or more the GNSS satellites 320, 330, 340, 345).

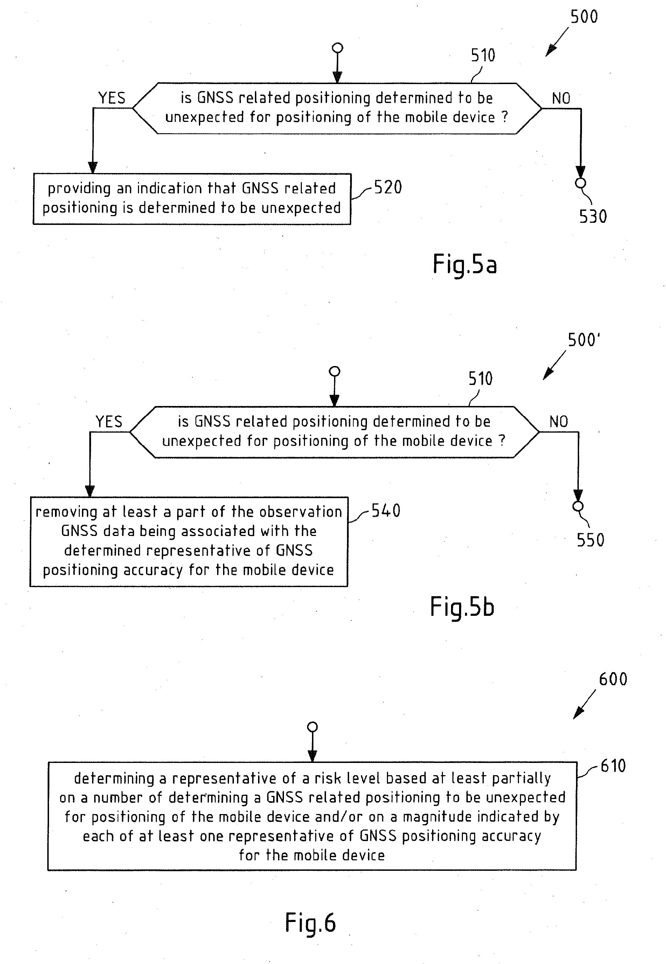

Fig. 5a is a flow chart 500 illustrating an exemplary embodiment of a method 500 according to the invention, wherein this flow chart 500 may be performed after method 200 has been performed, in particular after it is determined, at least partially based on the representative of GNSS accuracy, whether a GNSS related positioning is expected or unexpected for positioning of the mobile device in action 220. Without limiting the scope of the invention, it is assumed in the following that the apparatus 100 as described above with respect to Fig. 1 performs the steps of flow chart 500 or that mobile device 310 of Fig. 3 performs the steps of flow chart 500.

Method 500 comprises checking whether GNSS related positioning is determined (e.g. determined in action 220 of method 200) to be unexpected for positioning of the mobile device (action 510), and if this checking yields a positive result, method 500 proceeds with providing an indication that GNSS related positioning is determined to be unexpected.

For instance, said indication may represent a warning indication. Furthermore, said indication may be provided to a GNSS chipset of apparatus 100 or mobile device 310, e.g. to the above mentioned GNSS component, and/or to a positioning engine of apparatus 100 or mobile device 310, in order to inform the GNSS chipset and/or the positioning engine that GNSS functionality is considered to be spoofed. As an example, the GNSS chipset (e.g. the GNSS component) or the positioning engine can avoid, in response to receiving the indication, using a satellite signal on a specific frequency (which is assumed to be spoofed), and/or one or more satellite constellations for positioning.

As an example, said indication may represent a binary flag.

Furthermore, for instance, if said checking whether GNSS related positioning is determined to be unexpected for positioning of the mobile device in action 510 does not yield a positive result, method 500 may proceed at reference sign 530 and might not provide an indication that GNSS related positioning is determined to be unexpected or, e.g., might provide an indication that GNSS related positioning is determined to be expected.

As an example, said indication may represent a binary flag which may be set in action 520 and which might be not set if said checking whether GNSS related positioning is determined to be unexpected for positioning of the mobile device in action 510 does not yield a positive result.

Furthermore, as an example embodiment of method 500, the indication provided in action 520 might comprise or may be associated with information regarding at least one of:

(i) a satellite signal on a specific frequency;
(ii) at least one GNSS satellite constellation for positioning.

For instance, method 500 may comprise at action 520 determining which satellite signal and/or which at least one GNSS satellite constellation is considered to be spoofed and may provide this information regarding (i) a satellite signal on a specific frequency and/or (ii) at least one GNSS satellite constellation for positioning in action 520. Thus, e.g., if this indication is provided to the GNSS chipset and/or the positioning engine the GNSS chipset and/or the positioning engine can avoid using the i) a satellite signal on a specific frequency and/or (ii) at least one GNSS satellite constellation for positioning.

Fig. 5b is a flow chart 500' illustrating an exemplary embodiment of a method 500' according to the invention, wherein this flow chart 500' may be performed after method 200 has been performed, in particular after it is determined, at least partially based on the representative of GNSS accuracy, whether a GNSS related positioning is expected or unexpected for positioning of the mobile device in action 220. Without limiting the scope of the invention, it is assumed in the following that the apparatus 100 as described above with respect to Fig. 1 performs the steps of flow chart 500' or that mobile device 310 of Fig. 3 performs the steps of flow chart 500'.

Method 500' comprises checking whether GNSS related positioning is determined (e.g.. determined in action 220 of method 200) to be unexpected for positioning of the mobile device (action 510 - in a same way as method 500 depicted in Fig. 5a). If this checking yields a positive result, method 500' proceeds with removing at least a part (or all) of the observation GNSS data being associated with the representative of GNSS positioning accuracy for the mobile device determined in action 210 of method 200.

For instance, method 500' may determine which part of the observation GNSS data can not be corrected with the respective part of the correctional GNSS data, wherein the observation GNSS data and the correctional GNSS data corresponds to the observation GNSS data and the correctional GNSS data used in action 210 for determining the representative of GNSS positioning accuracy for the mobile device and then the determined part of the observation GNSS data may be removed (or deleted) in apparatus 100 and/or mobile device 310 such that it cannot be used anymore, e.g. by the GNSS chipset (e.g. the GNSS component) and/or the positioning engine.

Furthermore, if said checking in action 510 of method 500 does not yield a positive result, method 500' may proceed without removing at least part of the observation GNSS data (e.g. as indicated by reference sign 550).

Fig. 6 is a flow chart 600 illustrating an exemplary embodiment of a method 600 according to the invention, wherein this flow chart 600 may be performed after method 200 has been performed. Without limiting the scope of the invention, it is assumed in the following that the apparatus 100 as described above with respect to Fig. 1 performs the steps of flow chart 600 or that mobile device 310 of Fig. 3 performs the steps of flow chart 600.

Method 600 determines a representative of a risk level based at least partially on a number of determining a GNSS related positioning to be unexpected for positioning of the mobile device and/or on a magnitude indicated by each of at least one representative of GNSS positioning accuracy for the mobile device (action 610).

The number of determining a GNSS related positioning to be unexpected for positioning of the mobile device in action 210 may represent a number indicating how many times a GNSS related positioning was determined to be unexpected for positioning of the mobile device in action 210 of method 200, in particular if method 200 is performed several times.

For instance, method 200 might be configured to be performed repeatedly, e.g. method 200 may jump from reference sign 230 to reference 205, e.g. after a predetermined time interval, such that method 200 may repeatedly determine a representative of GNSS positioning accuracy for a mobile device (e.g. the same mobile device) at least partially based on observation GNSS data (wherein this observation GNSS data may be updated at least partially - e.g. since apparatus 100 and/or mobile device 310 obtained new observation GNSS data in the meantime compared to last action 210) and on correctional GNSS data (e.g., correctional GNSS might be updated at least partially) in action 210, and determine, at least partially based on the representative of GNSS positioning accuracy (determined in lastly performed action 210), whether a GNSS related positioning is expected or unexpected of the mobile device. Then, during these iterations, it may be counted (e.g. by means of method 200) how many times a GNSS related positioning is determined to be unexpected in the action(s) 220 performed during the iterations by means of a counter, wherein this counter may correspond to the number of determining a GNSS related positioning to be unexpected for positioning of the mobile device. As an example, this counter may be incremented during action 420 of method 400 or during action 430 of method 400', wherein method 400 may jump from reference sign 425 or reference sign 435 to reference sign 205 of method 200 in order to perform method 200 repeatedly, and wherein method 400' may jump from reference sign 425 or reference sign 435 to reference sign 205 of method 200 in order to perform method 200 repeatedly. Furthermore, for instance, the counter may be reset, e.g. in response to a user interaction with apparatus 100 or mobile device 310 or by means of another rule.

As an example, the representative of a risk level determined in action 610 is determined to be a higher risk level if the number of determining a GNSS related positioning to be unexpected for positioning of the mobile device is higher compared to the case that the number of determining a GNSS related positioning to be unexpected for positioning of the mobile device is lower, i.e. a higher number of determining a GNSS related positioning to be unexpected for positioning of the mobile device may lead to a higher risk level indicated by the representative of a risk level determined in action 610 and a lower number of determining a GNSS related positioning to be unexpected for positioning of the mobile device may lead to a lower risk level indicated by the representative of a risk level determined in action 610.

And/or, for example, a magnitude indicated by each of at least one representative of GNSS positioning accuracy for the mobile device. For instance, the magnitude may correspond or may be indicative of the in-accuracy indicated by a respective representative of GNSS positioning accuracy for the mobile device determined in an action 210 in method 200, e.g. the magnitude may correspond to or may at least correlate to the distance value of the respective representative of GNSS positioning accuracy for the mobile device determined in an action 210. Furthermore, as an example, the method 200 may be performed repeatedly, e.g. method 200 may jump from reference sign 230 to reference 205, as explained above, such that each time action 210 is performed a representative of GNSS positioning accuracy for the mobile device determined in this action 210 and a new magnitude indicated by the respective representative of GNSS positioning accuracy for the mobile device can be obtained. Then, for instance, the at least one representative of GNSS positioning accuracy for the mobile device of action 610 may represent the last determined n representative(s) of GNSS positioning accuracy for the mobile device determined in the last n actions 210 (with n being an integer and n≥1 holds), wherein the corresponding last n magnitudes of these n determined representative(s) of GNSS positioning accuracy for the mobile device may be used in action 610 for determining the representative of a risk level.

As an example, the representative of a risk level determined in action 610 is determined to be a higher risk level if a magnitude of a representative (determined in one of action(s) 210 of method 200) of the at least one representative of GNSS positioning accuracy for the mobile device is higher compared to the case that magnitude of this representative is lower, i.e. a higher magnitude of a representative (determined in one of action(s) 210 of method 200) of the at least one representative of GNSS positioning accuracy for the mobile device may lead to a higher risk level indicated by the representative of a risk level determined in action 610 and a lower magnitude of a representative (determined in one of action(s) 210 of method 200) of the at least one representative of GNSS positioning accuracy for the mobile device may lead to a lower risk indicated by the representative of a risk level determined in action 610.

For instance, the representation of a risk level determined in action 610 may be provided to GNSS chipset (or GNSS component) or a positioning engine of apparatus 100 or mobile device 310 in order to provide a kind of reliability information regarding GNSS positioning.

As a non-limiting example embodiment, said representative of GNSS positioning accuracy may comprise (or may represent) a Figure Of Merit (FOM) value. For instance, the GNSS positioning system may be a Precise Point Positioning (PPP) system which is configured to remove and/or model GNSS system errors to provide a high level of position accuracy wherein the GNSS component of the mobile device 310 may comprise a PPP receiver, and wherein the PPP receiver may be configured to estimate the accuracy of the GNSS positioning by monitoring the Figure of Merit (FOM) value which may be the sum of the observation residuals. For instance, the better the accuracy of the estimation the lower the FOM value may be.

For instance, a GNSS position solution in a GNSS component (e.g. a GNSS receiver or a PPP receiver) or GNSS chipset or GNSS positioning engine of apparatus 100 or mobile device 310 might be obtained by using some sort of least square optimization. This means that the residuals between observed data and estimated true data is minimized.

For GNSS the observed data are used to determine pseudoranges, i.e. the measured distances to the satellites including the clock error in the receiver.

A non-limiting example will be presented below:

A GNSS component (e.g. a GNSS receiver) or GNSS chipset or GNSS positioning engine (of apparatus 100 or mobile device 310) receives four GPS signals with time stamp: 1001, 1020, 1018 and 1003 (all times in milli seconds). The GNSS component (e.g. a GNSS receiver) or GNSS chipset or GNSS positioning engine (of apparatus 100 or mobile device 310) may estimate its time to be 1090 = Rx'.

The travel time for the four signals are then:

$$1090 - 1001 = 89 \text{ ms}$$

$$1090 - 1020 = 70 \text{ ms}$$

$$1090\text{-}1018 = 72\,\text{ms}$$

$$1090\text{-}1003 = 83\,\text{ms}$$

Multiplying by speed of light leads to the pseudo ranges:

26681528.762 m

20985472.06 m

21585056.976 m

24882774.014 m

Next, the predicted ranges to the satellites may be obtained by calculating the positions of all satellites (from the satellite data) and assuming the user is at position X,Y,Z. This gives us 4 predicted ranges with respect to this non-limiting example:

26682521.762 m
20986475.06 m
21586050.976 m
24883770.014 m

From these the so called observed - predicted may be formed:

1001 m

1003 m

994 m

996 m

The GNSS component (e.g. a GNSS receiver or a PPP receiver) or GNSS chipset or GNSS positioning engine (of apparatus 100 or mobile device 310) may then continue updating the position X,Y Z and the receiver time error until the observed-predicted is minimized and the residuals are then the differences between observed and predicted:

1 m
3 m
- 6 m
- 4 m

Then, for instance, the figure of Merit (FOM) may be defined for the above given example as:

$$FOM = \sqrt{(1)^2 + (3)^2 + (-6)^2 + (-4)^2} = 7.87$$

So the smaller the FOM is the better the GNSS position solution is. Thus, for instance, in this example embodiment, said representative of GNSS positioning accuracy may comprise (or may represent) a Figure Of Merit (FOM) value, wherein the smaller the FOM is the better the GNSS positioning accurary is.

As an example, because the observations GNSS data (e.g. the observation GNSS data used in action 210 of method 200) contain errors it is not possible to get a FOM close to zero unless it is possible to correct for these errors. When it is possible to correct for all or most of the error the expectation is that FOM is close to zero.

For instance, the GNSS signals contain orbit, clock and ionospheric information, and, in particular the GNSS signals may contain nothing else, in particular no troposphere or site displacement data. The GNSS component (e.g. a GNSS receiver or a PPP receiver) or GNSS chipset or GNSS positioning engine (of apparatus 100 or mobile device 310) instead use standard models (e.g. embedded in the receiver software).

Thus, as an example, the correctional data can be used (which may in particular be external correctiondal data) that will correct for all (or most of the) errors. Such corrections may be orbit, and/or clock, and/or ionosphere, and/or troposphere, and/or differential code biases for example. If a spoofer transmits signals that, for example, does not contain any errors at all or contain errors different from the true once there is again a situation that the FOM cannot be close to zero as expected and thus, if said representative of GNSS positioning accuracy comprises or represents a Figure Of Merit (FOM) value, it may be determined in action 220 of method 200 that a GNSS related positioning is considered to be unexpeted for positioning of the mobile device at least partially based on the representative of GNSS positioning accuracy, since the FOM is not close to zero as expected (e.g. the FOM is higher than a predefined FOM threshold - wherein this predefined FOM threshold may represent the above mentioned predefined accuracy threshold). For instance, said predefined accuracy threshold may be 0,005m, or 0,01m, 0,02m, 0,05m, 0,1m, 0,3m, 0,5m, 1m or 2m or any other well-suited value of the predefined accuracy threshold. For instance, if the GNSS positioning system is a PPP system the predefined accuracy threshold may be 0,005m, or 0,01m, 0,02m, 0,05m, 0,1m, in particular 0,005m or 0,01m.

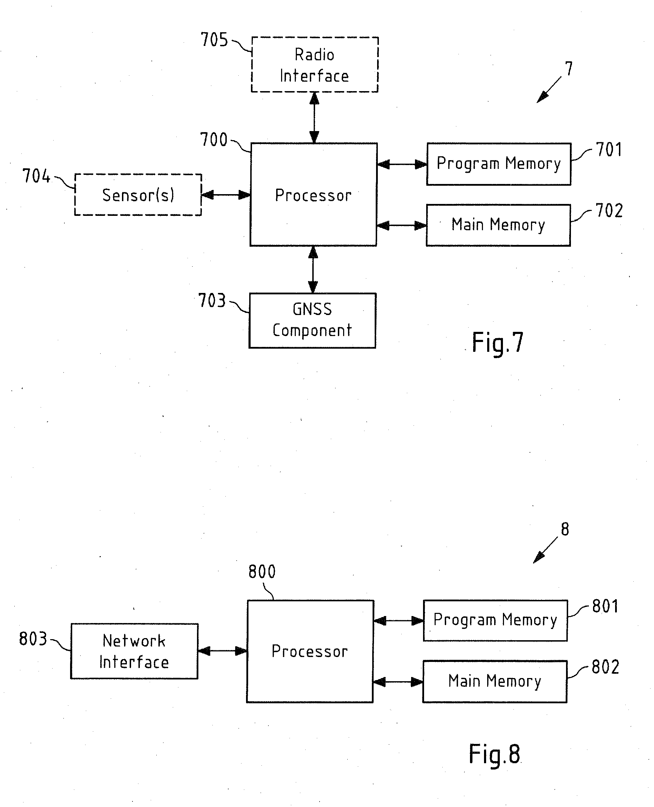

Fig. 7 is a block diagram of an exemplary embodiment of mobile device 7 according to the invention. In the following, it is assumed that mobile device 310 of Fig. 3 corresponds to this mobile device 7 without any limitations and/or that apparatus 100 of Fig. 1 is a mobile device and corresponds to this mobile device 7.

Mobile device 7 comprises a processor 700. Processor 700 may represent a single processor or two or more processors, which are for instance at least partially coupled, for instance via a bus. Processor 700 executes a computer program code stored in program memory 701 (e.g. computer program code causing mobile device 7 to perform any one embodiment of the disclosed method (e.g. the steps of any one embodiment of the disclosed method) or a part thereof (e.g. at least some steps of any one embodiment of the disclosed method) (in particular method 200 and/or method 400 and/or method 400' and /or method 500 and/or method 500' and/or method 600 as described with respect to of Figs. 2, 4a, 4b, 5a, 5b and 6), when executed on processor 700, and interfaces with a main memory 702. Program memory 701 may also contain an operating system for processor 700 and further data like observation GNSS data (which might comprise GNSS navigation data) and correctional GNSS data. Some or all of memories 701 and 702 may also be included into processor 700. One of or both of memories 701 and 702 may be fixedly connected to processor 700 or at least partially removable from processor 700, for example in the form of a memory card or stick.

A program memory (e.g. program memory 701) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 702) may for example be a volatile memory. It may for example be a DRAM memory, to give non-limiting example. It may for instance be used as a working memory for a processor (e.g. processor 700) when executing an operating system and/or programs.

Moreover, processor 700 controls a GNSS component 703 configured for receiving GNSS signals (e.g. GNSS signals broadcasted by at least GNSS satellites 320, 330, 340, 345 of Fig. 3), wherein GNSS component 703 may be considered to comprise a GNSS sensor and/or GNSS receiver. GNSS component 703 is configured for (e.g. periodically or repeatedly) scanning for observable GNSS signals (e.g. GNSS signals broadcasted by at least GNSS satellites 320, 330, 340 and 345 of Fig. 3). Therein, a respective GNSS signal may be understood to be observable if the respective GNSS signal is receivable with a minimum quality by GNSS component 703. For instance, the GNSS component 703 may be a GPS component and/or a Galileo component, e.g. comprising a GPS sensor and/or a Galileo sensor. As an example, said GNSS component 703 may comprise a PPP (Precise Point Positioning) receiver, e.g. as exemplarily mentioned above with respect to Fig. 3 and mobile device 310. For instance, the GNSS component 703 may be connected to at least one GNSS antenna (not depicted in Fig. 7), and wherein the at least one GNSS antenna is adapted to receive GNSS signals from a plurality of GNSS satellites, e.g. GNSS satellites 320, 330, 340, 345 of Fig. 3.

GNSS component 703 may enable mobile device 7 to receive GNSS navigation data contained in a message conveyed in an observed GNSS signal, wherein at least one observed GNSS signal might be assumed to represent and/or to be a basis for the observation GNSS data (e.g. used in action 210 of method 200), e.g. as explained with respect to Fig 3 and method 200. To this end, GNSS component 703 may be configured for extracting the GNSS navigation data from the received or observed GNSS signal. Further, as an example embodiment, GNSS sensor 704 may enable mobile device 7 to receive at least a part (or all) of the correctional GNNS data (which might be used in action 210 of method 200) if contained in an observed (or received) GNSS signal, e.g. in GNSS signal 361 transmitted by GNSS satellite 345 of Fig. 3. Moreover, GNSS component 703 may enable mobile device 7 to estimate its position based on GNSS signals observed when scanning for GNSS signals at this position, wherein these GNSS signals observed when scanning for GNSS signals at this position might be assumed to represent and/or to be a basis for the observation GNSS data (e.g. used in action 210 of method 200), e.g. as explained with respect to Fig 3 and method 200. For example, GNSS component 703 may be configured for providing processor 700 with data necessary for determining a position estimate of the position of mobile device 7. To this end, GNSS component 703 may be configured for extracting, from each of the observed GNSS signals, respective GNSS data contained in a message or a part thereof conveyed by the respective GNSS signal (e.g. representing a respective time-of-transmission of the respective GNSS signal from the respective GNSS satellite) and for determining, for each of the observed GNSS signals, respective GNSS observation data relating to the observation of the respective GNSS signal by GNSS component 703 (e.g. representing a respective time-of-arrival of the respective GNSS signals). It is to be understood that any computer program code required for receiving and processing received GNSS signals may be stored in an own memory of GNSS component 703 and may be executed by an own processor of GNSS component 703 or it may be stored for example in program memory 701 and executed for example by processor 700.

Processor 700 may be configured to further control an optional radio interface 705 configured for receiving and, optionally, transmitting radio signals. A radio interface may be or may comprise a radio receiver circuit and/or a radio transmitter circuit and/or a radio transceiver circuit. Such circuits may comprise modulators, filters, mixers, switches and/or one or more antennas to allow transmission and/or reception of radio signals. According to an example embodiment, mobile device 7 may use the radio interface 705 to receive the correctional GNSS data (which may be used in action 210 of method 200), in particular via a bidirectional wireless communication link which may be configured to connect the mobile device 7 with the network server 360 depicted in Fig. 3.

For instance, optional radio interface 705 may comprise a Wi-Fi transceiver configured to transmit and receive Wi-Fi radio signals (e.g. via bidirectional Wi-Fi communication link), e.g. in line with any current or future version of any of the IEEE 802.11 standards (e.g. /. for example specified by the standards of the IEEE 802.11 family (http://www.ieee.org/) or any other Wi-Fi standard. Radio interface 705 enables mobile device 7 to scan for observable Wi-Fi radio signals transmitted (e.g. broadcasted) by access points, e.g. access point 350 of system 300 under the assumption that access point 350 represents a Wi-Fi access point. Therein, a Wi-Fi radio signal may be understood to be observable if the Wi-Fi radio signal is receivable with a minimum quality (e.g. a minimum signal-to-noise ratio and/or a minimum signal power, e.g. at least -90 dBm or -95 dBm). It is to be understood that any computer program code required for receiving and processing received Wi-Fi radio signals may be stored in an own memory of the radio interface 703 and executed by an own processor of the radio interface 703 or it may be stored for example in memory 702 and executed for example by processor 700.

And/or, for instance, optional radio interface 705 may comprise a cellular transceiver configured for communicating via a cellular network (e.g. to transmit and receive cellular radio signals - i.e., via a bidirectional cellular wireless communication link). For example, radio interface 705 may be or may comprise a 2G/3G/4G/5G radio transceiver.

Moreover, for instance, mobile device 7 may comprise one or more optional sensors 704, and the processor 700 controls the one or more sensors 704 configured for determining sensor information indicating a movement of mobile device 7. The determined sensor information may be provided to processor 700. Therein, sensor information indicating a movement of the mobile device may be any information (e.g. qualitatively or quantitatively) representing an event or change in the environment of mobile device 7 detected by a sensor that is indicative (e.g. characteristic) for a movement of mobile device 7. An event or change in the environment of mobile device 8 may for example be an event associated with or a change of a physical quantity (e.g. acceleration, orientation, shock, speed, etc.) that is characteristic for a movement of mobile device 7. Examples of optional sensor(s) 704 are an inertial or motion sensor (e.g. a speed sensor, an acceleration sensor, a shock sensor, an activity or step sensor, an orientation sensor like a compass or a gyroscope), an optical sensor (e.g. a camera), or a combination thereof.

The components 701 to 705 of mobile device 7 may for instance be connected with processor 700 by means of one or more serial and/or parallel busses.

It is to be understood that mobile device 7 may comprise various other components like a user interface for receiving user input.

Fig. 8 is a block diagram of an exemplary embodiment of a server 8 according to the invention, which may (for instance) represent network server 8 configured to provide correctional GNSS data to one or more mobile devices 310, 7 and/or apparatus 100 wherein this correctional GNSS data may represent the correction GNSS data used in action 210 of method 200. In the following, it may be assumed that server 360 of system 300 of Fig. 2 corresponds to this server 8. Furthermore, as an example embodiment, server 8 may be considered to represent a cloud component

Server 8 comprises a processor 800. Processor 800 may represent a single processor or two or more processors, which are for instance at least partially coupled, for instance via a bus. Processor 800 executes a computer program code (e.g. computer program code causing server 8 to store correctional GNSS data which might be provided to mobile device 310, 7 and/or apparatus 100) stored in program memory 801, and interfaces with a main memory 802. Accordingly, program memory 801 may contain correctional GNSS data. Program memory 801 may also contain an operating system for processor 800. Some or all of memories 801 and 802 may also be included into processor 800. One of or both of memories 801 and 802 may be fixedly connected to processor 800 or at least partially removable from processor 800, for example in the form of a memory card or stick.

Processor 800 further controls a network interface 803 which is configured to communicate via a communication network. Server 8 may use communication interface 303 to communicate with mobile device 310 of system 300 (or mobile device 7). In the following, it is assumed that network interface 803 is a wireless communication interface configured for communicating via a cellular network (e.g. to transmit and receive cellular radio signals). For example, network interface 803 may be or may comprise a 2G/3G/4G/5G radio transceiver. It is however to be understood that the invention is not limited to this. Interface 803 may similarly be a wireless communication interface configured for communicating via a Device-to-Device (D2D) communication path or a (bi-directional) wireless communication connection in a Wireless Local Area Network (WLAN). For example, server 8 may use network interface 803 to transmit stored correctional GNSS data (e.g. as part of or with GNSS assistance data) to mobile device 310 of system 300 (e.g. via wireless communication link 351, 365) or mobile device 7 (or apparatus 100).

The components 801 to 803 of server 8 may for example be connected with processor 800 by means of one or more serial and/or parallel busses.

It is to be understood that server 8 may comprise various other components like a user interface for receiving user input.

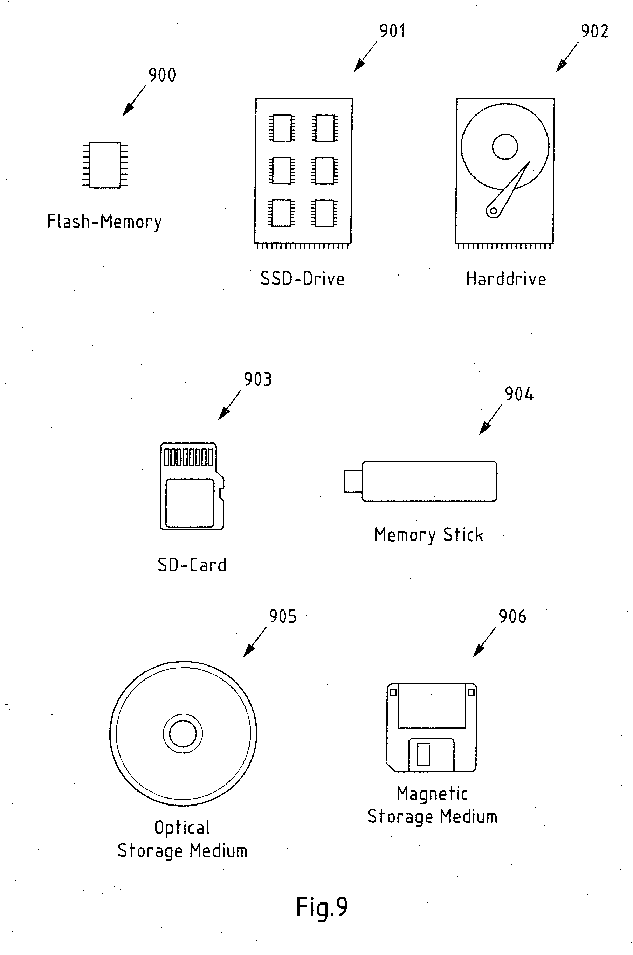

Fig. 9 is a schematic illustration of examples of tangible and non-transitory computer-readable storage media according to the present invention that may for instance be used to implement memory 701 of Fig. 7, and memory 801 of Fig. 8. To this end, Fig. 9 displays a flash memory 900, which may for instance be soldered or bonded to a printed circuit board, a solid-state drive 901 comprising a plurality of memory chips (e.g. Flash memory chips), a magnetic hard drive 902, a Secure Digital (SD) card 903, a Universal Serial Bus (USB) memory stick 904, an optical storage medium 905 (such as for instance a CD-ROM or DVD) and a magnetic storage medium 906.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:

(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 700 and 800 of Figs. 7 and 8, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

**Claims**

1. A method comprising:

    - determining a representative of GNSS positioning accuracy for a mobile device at least partially based on observation GNSS data and on correctional GNSS data; and
    - determining, at least partially based on the representative of GNSS positioning accuracy, whether a GNSS related positioning is expected or unexpected for positioning of the mobile device.

2. The method according to claim 1, wherein the GNSS related positioning is determined to be unexpected if the representative of GNSS positioning accuracy indicates an accuracy of low quality and/or wherein the GNSS related positioning is determined to be expected if the representative of GNSS positioning accuracy indicates an accuracy of good quality.

3. The method according to any of the preceding claims, wherein said determining, at least partially based on the representative of positioning accuracy, whether a GNSS related positioning is expected or unexpected for positioning of the mobile device comprises checking whether a positioning accuracy indicated by the representative of GNSS positioning accuracy is below a predefined accuracy threshold, and if not, a GNSS related positioning is determined to be unexpected, and if yes, a GNSS related positioning is determined to be expected.

4. The method according to any of the preceding claims, wherein the representative of GNSS positioning accuracy is indicative of an estimated target accuracy of a position determined based on the observed GNSS data and the correctional GNSS data.

5. The method according to any of the preceding claims, wherein the representative of GNSS positioning accuracy comprises a Figure Of Merit value.

6. The method according to any of the preceding claims, wherein the observation GNSS data is normally obtained from GNSS signals received at the mobile device.

7. The method according to any of the preceding claims, wherein the correctional GNSS data are obtained from a network server, in particular received by the mobile device via a wireless connection.

8. The method according to any of the preceding claims, wherein the observation GNSS data comprises at least one of the following:

    (i) satellite orbit data;
    (ii) satellite clock data;
    (iii) ionospheric data;
    (iv) tropospheric data;
    (v) site displacement data;

    and wherein the correctional GNSS data comprises at least one of the following:

    (i) satellite orbit correction data;
    (ii) satellite clock correction data;
    (iii) ionospheric correction data;
    (iv) tropospheric correction data;
    (v) site displacement correction data.

9. The method according to any of the preceding claims, comprising providing an indication if it is determined that the GNSS positioning is unexpected for positioning of the mobile device.

10. The method according to claim 9, wherein the indication comprises an information regarding at least one of:

    (i) a satellite signal on a specific frequency;
    (ii) at least one satellite constellation for positioning.

**11.** The method according to any of the preceding claims, comprising, if it is determined that the GNSS positioning is unexpected for positioning of the mobile device, removing at least a part of the observation GNSS data being associated with the determined representative of GNSS positioning accuracy for the mobile device.

**12.** The method according to any of the preceding claims, comprising determining a representative of a risk level based at least partially on a number of determining a GNSS related positioning to be unexpected for positioning of the mobile device and/or on a magnitude indicated by each of at least one representative of GNSS positioning accuracy for the mobile device.

**13.** A computer program code, the computer program code when executed by a processor causing an apparatus to perform the method according to any of claims 1 to 12.

**14.** An apparatus, the apparatus comprising means for performing the method according to any of claims 1 to 12.

**15.** The apparatus according to claim 14, wherein the apparatus is a mobile device.

100

Processor — 101

102

Memory with program code for

- determining a representative of GNSS positioning accuracy for a mobile device at least partially based on observation GNSS data and on correctional GNSS data; and

- determining, at least partially based on the representative of GNSS positioning accuracy, whether a GNSS related positioning is expected or unexpected for positioning of the mobile device.

Apparatus

## Fig.1

200

205

determining a representative of GNSS positioning accuracy for a mobile device at least partially based on observation GNSS data and on correctional GNSS data — 210

determining, at least partially based on the representative of GNSS positioning accuracy, whether a GNSS related positioning is expected or unexpected for positioning of the mobile device — 220

230

## Fig.2

Fig.3

EP 3 805 799 A1

400

410

YES / indicates representative of GNSS related
positioning an accuray of low quality ? \ NO

420 — determining a GNSS related
positioning to be unexpected

425

determining a GNSS related | 430
positioning to be expected

435

## Fig.4a

400'

410'

NO / is positioning accuracy indicated by the
representative of GNSS related positioning
below a predefined accurary threshold ? \ YES

420 — determining a GNSS related
positioning to be unexpected

425

determining a GNSS related | 430
positioning to be expected

435

## Fig.4b

500

510

YES ⟨ is GNSS related positioning determined to be
unexpected for positioning of the mobile device ? ⟩ NO

providing an indication that GNSS related
positioning is determined to be unexpected ⟍520

530

## Fig.5a

500'

510

YES ⟨ is GNSS related positioning determined to be
unexpected for positioning of the mobile device ? ⟩ NO

removing at least a part of the observation
GNSS data being associated with the
determined representative of GNSS
positioning accuracy for the mobile device ⟍540

550

## Fig.5b

600

610

determining a representative of a risk level based at least partially
on a number of determining a GNSS related positioning to be unexpected
for positioning of the mobile device and/or on a magnitude indicated by
each of at least one representative of GNSS positioning accuracy
for the mobile device

## Fig.6

705 — Radio Interface

7

700 — Processor

704 — Sensor(s)

701 — Program Memory

702 — Main Memory

703 — GNSS Component

Fig.7

8

800 — Processor

803 — Network Interface

801 — Program Memory

802 — Main Memory

Fig.8

900

Flash-Memory

901

SSD-Drive

902

Harddrive

903

SD-Card

904

Memory Stick

905

Optical
Storage Medium

906

Magnetic
Storage Medium

Fig.9

26

Europäisches
Patentamt

European
Patent Office

Office européen
des brevets

# EUROPEAN SEARCH REPORT

Application Number

EP 19 20 2533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/109578 A1 (CORAZZA STÉPHANE [FR] ET AL) 21 April 2016 (2016-04-21) * figures 1,3 * * equations (EQ3)-(EQ5) * * paragraphs [0021], [0047] - [0053], [0066] - [0098] * | 1-15 | INV. G01S19/21 G01S19/39 |
| X | VAN DIGGELEN FRANK ET AL: "Test Results of a New DGPS RAIM Software Package", 49TH AM - PROCEEDINGS OF THE 49TH ANNUAL MEETING OF THE INSTITUTE OF NAVIGATION, THE INSTITUTE OF NAVIGATION, 8551 RIXLEW LANE SUITE 360 MANASSAS, VA 20109, USA, 23 June 1993 (1993-06-23), pages 641-646, XP056007125, * sections: Introduction The NAVSAGE RAIM Algorithm, an Overview * | 1-15 | |
| X | EP 2 487 506 A1 (TOLL COLLECT GMBH [DE]) 15 August 2012 (2012-08-15) * figure 1c * * paragraphs [0047] - [0049], [0089] - [0091] * * paragraphs [0097] - [0098], [0156], [0173] - [0174] * | 1-15 | TECHNICAL FIELDS SEARCHED (IPC) G01S |

The present search report has been drawn up for all claims

| Place of search | Date of completion of the search | Examiner |
|---|---|---|
| Munich | 7 April 2020 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 2533

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2020

| Patent document cited in search report | | Publication date | Patent family member(s) | | Publication date |
|---|---|---|---|---|---|
| US 2016109578 | A1 | 21-04-2016 | EP<br>FR<br>US | 3012667 A1<br>3027410 A1<br>2016109578 A1 | 27-04-2016<br>22-04-2016<br>21-04-2016 |
| EP 2487506 | A1 | 15-08-2012 | DK<br>EP | 2487506 T3<br>2487506 A1 | 18-08-2014<br>15-08-2012 |

EPO FORM P0459

For more details about this annex : see Official Journal of the European Patent Office, No. 12/82